# EUROPEAN PATENT SPECIFICATION

(11) **EP 1 488 590 B1**
(45) Date of publication and mention of the grant of the patent: **14.11.2012**
(21) Application number: 03716848.1
(22) Date of filing: 25.03.2003
(51) Int. Cl.: H04B 17/00, H04L 1/06, H04L 27/26, H04B 7/08

(54) **A MULTIPLE CHANNEL WIRELESS RECEIVER**
MEHRKANAL-DRAHTLOSER EMPFÄNGER
RECEPTEUR SANS FIL A CANAUX MULTIPLES

(30) Priority: 26.03.2002 US 107124
(43) Date of publication of application: 22.12.2004
(73) Proprietor: Intel Corporation, Santa Clara, CA 95052 (US)
(72) Inventor: TELLADO, Jose, Mountain View, CA 94040 (US); DRING, John, San Jose, CA 95111 (US)
(74) Representative: Dunlop, Hugh Christopher
(86) International application number: PCT/US2003/009322
(87) International publication number: WO 2003/084163

(56) References cited:
- EP-A- 1 185 001
- GB-A- 2 334 861
- US-A- 5 764 694

## Description

### Field of the Invention

The invention relates generally to a wireless communications receiver having multiple receiver channels wireless communications. More particularly, the invention relates to a system and method for adjusting amplitudes of multiple received information signals associated with each receiver channel, for optimization of received signal characteristics.

### Background of the Invention

Wireless communication systems commonly include information-carrying modulated carrier signals that are wirelessly transmitted from a transmission source (for example, a base transceiver station) to one or more receivers (for example, subscriber units) within an area or region.

A form of wireless communication includes multiple transmit antennae and/or multiple receiver antennae. Multiple antennae communication systems can support communication diversity and spatial multiplexing.

### A Wireless Channel

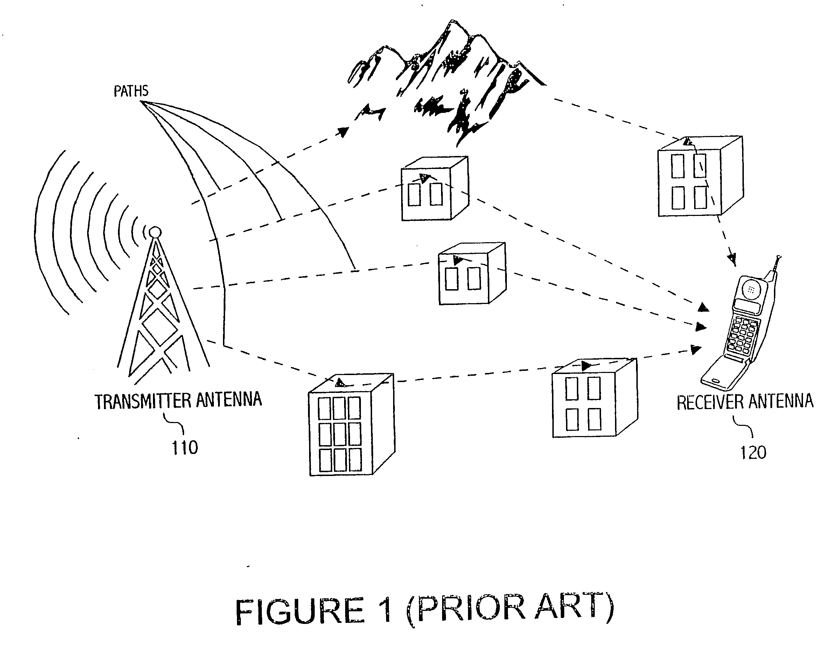

Figure 1 shows modulated carrier signals traveling from a transmitter 110 to a receiver 120 following many different (multiple) transmission paths.

Multipath can include a composition of a primary signal plus duplicate or echoed images caused by reflections of signals off objects between the transmitter and receiver. The receiver may receive the primary signal sent by the transmitter, but also receives secondary signals that are reflected off objects located in the signal path. The reflected signals arrive at the receiver later than the primary signal. Due to this misalignment, the multipath signals can cause intersymbol interference or distortion of the received signal.

The actual received signal can include a combination of a primary and several reflected signals. Because the distance traveled by the original signal is shorter than the reflected signals, the signals are received at different times. The time difference between the first received and the last received signal is called the delay spread and can be as great as several micro-seconds.

The multiple paths traveled by the modulated carrier signal typically results in fading of the modulated carrier signal. Fading causes the modulated carrier signal to attenuate in amplitude when multiple paths subtractively combine.

### Spatial multiplexing

Spatial multiplexing is a transmission technology that exploits multiple antennae at both the base transceiver station and at the subscriber units to increase the bit rate in a wireless radio link with no additional power or bandwidth consumption. Under certain conditions, spatial multiplexing offers a linear increase in spectrum efficiency with the number of antennae. For example, if three antennae are used at the transmitter (base transceiver station) and the receiver (subscriber unit), the stream of possibly coded information symbols is split into three independent substreams. These substreams occupy the same channel of a multiple access protocol. Possible same channel multiple access protocols include a same time slot in a time-division multiple access protocol, a same frequency slot in frequency-division multiple access protocol, a same code sequence in code-division multiple access protocol or a same spatial target location in space-division multiple access protocol. The substreams are applied separately to the transmit antennae and transmitted through a radio channel. Due to the presence of various scattering objects in the environment, each signal experiences multipath propagation.

The composite signals resulting from the transmission are finally captured by an array of receiving antennae with random phase and amplitudes. At the receiver array, a spatial signature of each of the received signals is estimated. Based on the spatial signatures, a signal processing technique is applied to separate the signals, recovering the original substreams.

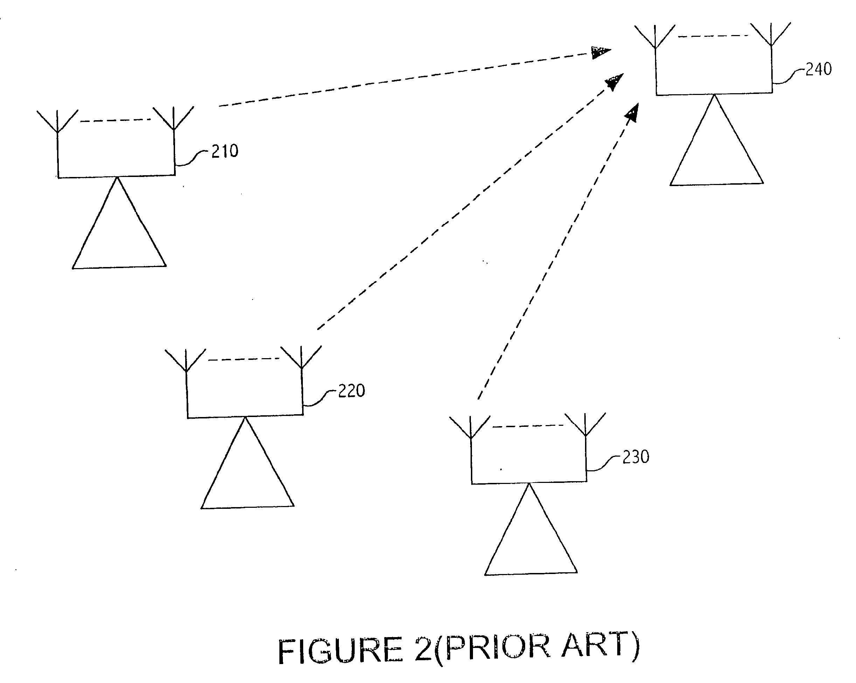

Figure 2 shows three transmitter antenna arrays 210, 220, 230 that transmit data symbols to a receiver antenna array 240. Each transmitter antenna array and each receiver antenna array include spatially separate antennae. A receiver connected to the receiver antenna array 240 separates the received signals.

Multiple antenna systems employ spatial multiplexing to improve data rates. In such schemes, multiple transmit signals are sent over separate antennas to obtain a linear increase in data rates. Spatial multiplexing schemes require no channel knowledge at the transmitter, but suffer performance loss in poor transmission quality channels. Poor transmission quality channels include properties that null out or attenuate some elements of the transmit signals. As a result, the receiver receives a badly distorted copy of the transmit signal and suffer performance loss. There is a need for additional transmit preprocessing schemes that assume channel knowledge and mitigate performance loss in poor transmission quality channels.

### Communication Diversity

Antenna diversity is a technique used in multiple antenna-based communication system to reduce the effects of multi-path fading. Antenna diversity can be obtained by providing a transmitter and/or a receiver with two or more antennae. Each transmit and receive antenna pair include a transmission channel. The transmission channels fade in a statistically independent manner. Therefore, when one transmission channel is fading due to the destructive effects of multi-path interference, another of the transmission channels is unlikely to be suffering from fading simultaneously. By virtue of the redundancy provided by these independent transmission channels, a receiver can often reduce the detrimental effects of fading.

Multiple channel receivers are generally associated with spatial multiplexing or diversity signals. Generally, each of the multiple transmit signals are received having signal amplitudes that are different from each other. Additionally, noise and distortion associated with each of the received signals is different. Multiple channel receivers perform best when information signal power of signals received by the receiver is optimized with respect to information signal interference and noise.

It is desirable to have a method and system for receiving multiple information signals at a common receiver. The method and system should include a receiver in which signal power of the received information signals is optimized while minimizing errors of the received information signals. Additionally, the method and system should include the ability to precisely characterize the errors.

EP 1 185 001discloses an OFDM system that uses a MIMO structure to transmit OFDM signals from a plurality of transmitters to a plurality of receivers, wherein, in response to receipt of the OFDM signal a determination is made as to whether time diversity or spatial diversity should be used for subsequent transmissions and transmits a feedback signal indicative of that determination in order to respectively provide better robustness to counter signal fading or an increase in a rate of data packet transfer, depending on which is implemented.

US 5 764 694 discloses a method for the efficient and simple measurement and evaluation of noise, echo, and distortion in a digital modulation system wherein a handshake operation is performed between the two modems to allow the modems to train their associated internal echo cancellers in an attempt to minimise the echo riding on the input signal, such that appropriate echo cancelling signals can be determined.

### Summary of the Invention

The invention is defined by the features of independent claims 1 and 18. The invention includes a method and system for adjusting amplitudes of receive information signals of multiple channel receivers to minimize the effects of noise and distortion. The invention also includes calibrating the effects of noise and distortion.

A first embodiment of the invention includes a method for receiving a plurality of information signals at a receiver. Each information signals travels through a corresponding transmission channel. The receiver includes a plurality of receiver channels, a receiver channel corresponding to each transmission channel. Each receiver channel receives a corresponding information signal. An amplitude of each received information signal associated with each receiver channel is adjusted so the amplitudes of all the received information signals are as great as possible, while still maintaining a target level of signal error of each of the received information signals. The amplitudes of the received information signals can be additionally adjusted so that the signal errors of each of the received information signals are approximately equal.

The first embodiment can further include signal processing of the amplitude adjusted received information signals enabling an estimation of a received information bit stream. The signal processing can include spatial processing and demodulation that provides estimation of the received information bit stream for spatially multiplexed received information signals. The signal processing can include spatial processing and demodulation that provides estimation of the received information bit stream for transmit diversity received information signals.

A second embodiment is similar to the first embodiment. The second embodiment further includes calibrating each receiver channel by measuring a noise reference and a distortion reference for aiding in the estimation of the received information bit stream. The signal error can be estimated by a statistical summation of the noise reference and the distortion reference. The amplitudes of the received information signals can be additionally adjusted so that the signal error of each of the received information signals is approximately equal. The amplitudes of the received information signals can be additionally adjusted so that the signal error of each of the received information signals is approximately equal to a determined target error. The target error can be dynamic depending upon signal error. The target error can be determined by minimizing a normalize error signal.

Another embodiment includes the noise reference and the distortion reference being additionally used for adjustment of the amplitudes of the received information signals.

Another embodiment includes the noise reference and the distortion reference being additionally used for aiding in selection of a transmission mode of the information signals.

A third embodiment is similar to the second embodiment. The third embodiment, further includes the received information signals being multiple carrier signals, and calibrating each receiver channel is accomplished by receiving multiple carrier signals in which at least one sub-carrier of the received multiple carrier signals is nulled. The noise reference and the distortion reference of each receiver channel can be estimated during the reception of the nulled sub-carrier. Calibrating each receiver channel can be accomplished before the receiver is phase-locked to a transmitter of the information signals by estimating the noise reference and distortion reference of each receiver channel during reception of a zero time slot. Calibrating each receiver channel can be accomplished after the receiver is phase-locked to a transmitter of the information signals by estimating the noise reference and distortion reference of each receiver channel during a zeroed sub-carrier.

The amplitude adjustments of the received information signals can be performed before the received information signals are digitally sampled, and after the received information signals are digitally sampled.

A fourth embodiment includes a method of receiving a plurality of information signals at a receiver. The information signals each traveling through a corresponding transmission channel. The receiver includes a plurality of receiver channels, a receiver channel corresponding to each transmission channel. Each receiver channel receives the corresponding information signal. The amplitude of each received information signal associated with each receiver channel is adjusted so that the amplitudes of all the received information signals are approximately equal to a maximum target level. Each of the received information signals is calibrated so that a signal error associated with each of the information signals is approximately equal for each of the received information signals. Each receiver channel can be calibrated by measuring a noise reference and a distortion reference for aiding in the estimation of the received information bit stream.

A fifth embodiment is similar to the fourth embodiment. The fifth embodiment further includes the signal error being estimated by summing the noise reference and the distortion reference. The amplitudes of the received information signals can be additionally adjusted so that the signal error of each of the received information signals is approximately equal. The noise reference and the distortion reference can be additionally used for adjustment of the amplitudes of the received information signals. The noise reference and the distortion reference can be additionally used for aiding in selection of a transmission mode of the information signals.

A sixth embodiment is similar to the fourth embodiment. The sixth embodiment further includes the received information signals being multiple carrier signals, and calibrating each receiver channel is accomplished by receiving multiple carrier signals in which at least one sub-carrier of the received multiple carrier signals is nulled. The noise reference and the distortion reference of each receiver channel can be estimated during the reception of the nulled sub-carrier. Calibrating each receiver channel can be accomplished before the receiver is phase-locked to a transmitter of the information signals by estimating the noise reference and distortion reference of each receiver channel during reception of a zero time slot. Calibrating each receiver channel can be accomplished after the receiver is phase-locked to a transmitter of the information signals by estimating the noise reference and distortion reference of each receiver channel during a zeroed sub-carrier.

A seventh embodiment is similar to the fourth embodiment. The seventh embodiment further includes monitoring a noise reference and a distortion reference. The received information signals can be multiple carrier signals, and the noise reference can be determined by zeroing odd tones of the multiple carrier signals. The distortion reference can be determined by zeroing a plurality of the multiple carrier signals, and the noise reference is determined by zeroing all of the multiple carrier signals. The distortion reference can be determined as a statistic of noise and distortion over a plurality of time intervals.

The maximum target level can be determined by a determined target_signal value. The determined target_signal value can be dynamically adjusted depending upon characterizations of the noise reference and the distortion reference.

The signal error associated with each of the information signals can be adjusted to be substantially equal to a determined target_error value. The determined target_error value can be dynamically adjusted depending upon characterizations of the noise reference and the distortion reference.

Other aspects and advantages of the present invention will become apparent from the following detailed description, taken in conjunction with the accompanying drawings, illustrating by way of example the principles of the invention.

### Brief Description of the Drawings

Figure 1 shows a prior art wireless system that includes multiple paths from a system transmitter to a system receiver.
Figure 2 shows a prior art wireless system that includes spatially separate transmitter antennae and spatially separate receiver antennae.
Figure 3 shows an embodiment of the invention.
Figure 4 show another embodiment of the invention that is depicts sources of noise and interference.
Figure 5 shows a frequency spectrum of orthogonal frequency division multiplexing (OFDM) sub-carrier signals.
Figure 6 shows another embodiment of the invention that includes the ability to characterize of noise and distortion associated with multiple received signals.
Figure 7 is a plot that shows the relationships between the noise and distortion of the received information signals, and the power of the received information signals.
Figure 8 shows a flow chart of steps or acts included within an embodiment of the invention.
Figure 9 shows a flow chart of steps or acts included within another embodiment of the invention.

### Detailed Description

As shown in the drawings for purposes of illustration, the invention is embodied in a method and system for adjusting amplitudes of receive information signals of multiple channel receivers to minimize the effects of noise and distortion. The invention also includes calibrating the effects of noise and distortion.

Particular embodiments of the present invention will now be described in detail with reference to the drawing figures. The techniques of the present invention may be implemented in various different types of wireless communication systems. Of particular relevance are cellular wireless communication systems. A base station transmits downlink signals over wireless channels to multiple subscribers. In addition, the subscribers transmit uplink signals over the wireless channels to the base station. Thus, for downlink communication the base station is a transmitter and the subscribers are receivers, while for uplink communication the base station is a receiver and the subscribers are transmitters. Subscribers may be mobile or fixed. Exemplary subscribers include devices such as portable telephones, car phones, and stationary receivers such as a wireless modem at a fixed location.

The base station can be provided with multiple antennas that allow antenna diversity techniques and/or spatial multiplexing techniques. In addition, each subscriber can be equipped with multiple antennas that permit further spatial multiplexing and/or antenna diversity. Single Input Multiple Output (SIMO) or Multiple Input Multiple Output (MIMO) configurations are both possible. In either of these configurations, the communications techniques can employ single-carrier or multi-carrier communications techniques. Although the techniques of the present invention apply to point-to-multipoint systems, they are not limited to such systems, but apply to any wireless communication system having at least two devices in wireless communication. Accordingly, for simplicity, the following description will focus on the invention as applied to a single transmitter-receiver pair, even though it is understood that it applies to systems with any number of such pairs.

Point-to-multipoint applications of the invention can include various types of multiple access schemes. Such schemes include, but are not limited to, time division multiple access (TDMA), frequency division multiple access (FDMA), code division multiple access (CDMA), orthogonal frequency division multiple access (OFDMA) and wavelet division multiple access.

The transmission can be time division duplex (TDD). That is, the downlink transmission can occupy the same channel (same transmission frequency) as the uplink transmission, but occur at different times. Alternatively, the transmission can be frequency division duplex (FDD). That is, the downlink transmission can be at a different frequency than the uplink transmission. FDD allows downlink transmission and uplink transmission to occur simultaneously.

Typically, variations of the wireless channels cause uplink and downlink signals to experience fluctuating levels of attenuation, interference, multi-path fading and other deleterious effects. In addition, the presence of multiple signal paths (due to reflections off buildings and other obstacles in the propagation environment) causes variations of channel response over the frequency bandwidth, and these variations may change with time as well. As a result, there are temporal changes in channel communication parameters such as data capacity, spectral efficiency, throughput, and signal quality parameters, e.g., signal-to-interference and noise ratio (SINR), and signal-to-noise ratio (SNR).

Information is transmitted over the wireless channel using one of various possible transmission modes. For the purposes of the present application, a transmission mode is defined to be a particular modulation type and rate, a particular code type and rate, and may also include other controlled aspects of transmission such as the use of antenna diversity or spatial multiplexing. Using a particular transmission mode, data intended for communication over the wireless channel is coded, modulated, and transmitted. Examples of typical coding modes are convolution and block codes, and more particularly, codes known in the art such as Hamming Codes, Cyclic Codes and Reed-Solomon Codes. Examples of typical modulation modes are circular constellations such as BPSK, QPSK, and other *m*-ary PSK, square constellations such as 4QAM, 16QAM, and other *m*-ary QAM. Additional popular modulation techniques include GMSK and *m*-ary FSK. The implementation and use of these various transmission modes in communication systems is well known in the art.

For channels with significant delay-spread, typically orthogonal frequency division multiplexing (OFDM) modulation system (as will be described later) is employed. In an OFDM system that includes multiple frequency tones, the delay spread results in each frequency tone having a different fade.

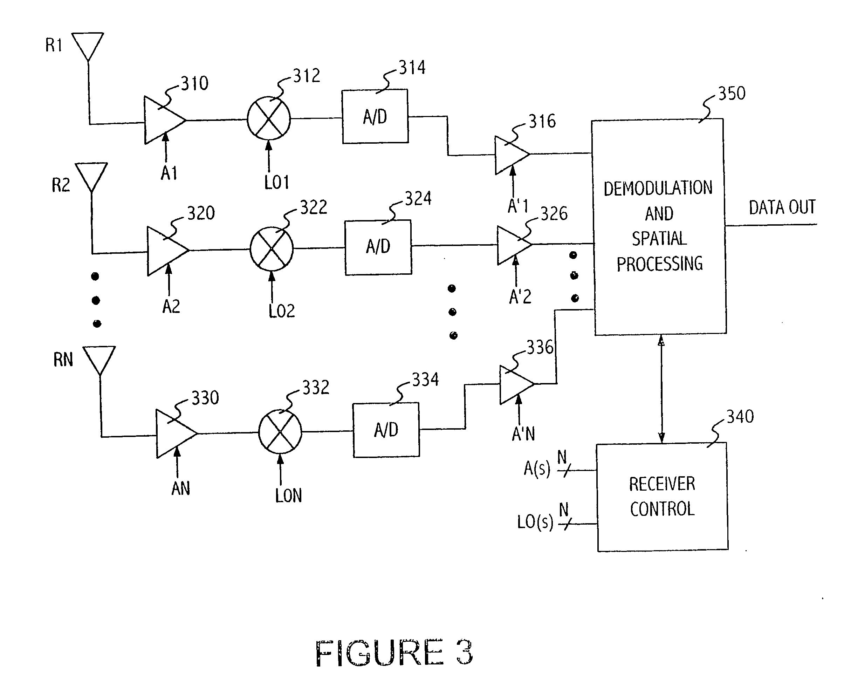

Figure 3 shows an embodiment of the invention. This embodiment includes a plurality of receiver antennas R1, R2 ... RN. Each receiver antenna R1, R2 ... RN corresponds with a separate receiver chain.

Each receiver chain generally includes an adjustable gain element, a frequency converter and an analog to digital converter (ADC). For example, a first receiver chain includes a first adjustable gain element 310, a first frequency converter 312 and a first ADC 314. A first digital adjustable gain element 316 has been included to depict a possible inclusion of gain adjustment after the first ADC 314. A second receiver chain includes a second adjustable gain element 320, a second frequency converter 322 and a second ADC 324. A second digital adjustable gain element 326 has been included to depict a possible inclusion of gain adjustment after the second ADC 324. An Nth receiver chain includes an Nth adjustable gain element 330, an Nth frequency converter 332 and an Nth ADC 334. An Nth digital adjustable gain element 336 has been included to depict a possible inclusion of gain adjustment after the Nth ADC 334.

A receiver controller 340 generates drive signals for the adjustable gain elements 310, 320, 330, the frequency converters 312, 322, 332, and the ADCs 314, 324, 334. The adjustable gain elements 310, 320, 330 can increase or decease amplitudes of the information signals received by the receiver chains. Control signals of the adjustable gain elements 310, 320, 330 are designated A1, A2 ... AN.

Generally, the frequency converters 312, 322, 332 down convert the frequencies of the information signals received by the receiver chains to a base-band frequency. Drive signals for frequency down-converting the information signals are designated LO1, LO2 ... LON. Generally, the drive signals LO1, LO2 ... LON are all at the same frequency, and the frequency converters 312, 322, 332 down convert the frequencies of the information signals to a common base band frequency.

The ADCs 314, 324, 334 sample the analog base band information signals generating digital representations of the received information signals. Sampling signals that determine that the sampling frequencies of the ADCs 314, 324, 334 can also be generated by the receiver controller 340.

As previously mentioned, the digital adjustable gain elements 316, 326, 336 have been included to show that the amplitudes of the received information signal can also be adjusted in the digital (sampled) domain. It is to be understood that frequency down conversion of the received information signal can also take place in the digital domain.

The received information signals can be transmitted from a transmitter that includes k spatial separate streams. Generally, such a transmitter applies an encoding mode to each of the k streams to encode the data to be transmitted. Before transmission, the data may be interleaved and pre-coded. Interleaving and pre-coding are well known in the art of communication systems. The transmission rate or throughput of the data varies depending upon the modulation, coding rates and transmission scheme (diversity or spatial multiplexing) used in each of the k streams.

A demodulation and spatial processing block 350 performs receive processing to recover the k encoded streams. The recovered k streams are signal detected, decoded and de-multiplexed for recovery the data. In the case of antenna diversity processing, it should be understood that k is equal to one and thus there is only a single stream recovered.

An embodiment of the invention includes adjusting an amplitude of each received information signal associated with each receiver channel so the amplitudes of all the received information signals are as great as possible, while still maintaining a target level of signal error of each of the received information signals. The signal error of the received information signal generally includes both noise and distortion.

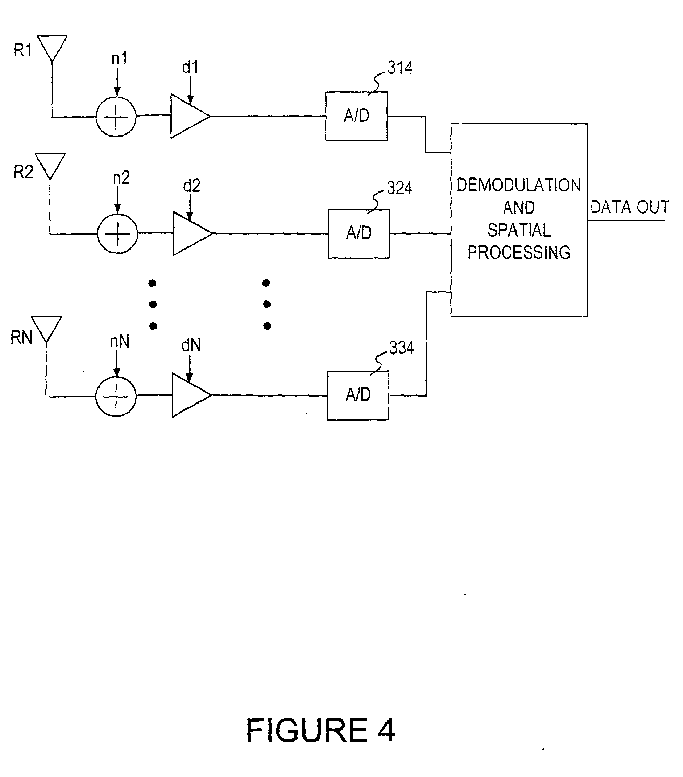

Figure 4 shows an embodiment of the invention in which sources of noise and interference are depicted. The received information signals already have noise and distortion components associated with them even before being received by the receiver chains. However, the receiver chains also contribute some signal error (noise and distortion) to the received information signals.

Each receiver chain has an absolute noise floor. This noise floor contributes to the noise associated with the received information signals. Additionally, each of the components in the receiver chains can also contribute to distortion of the received information signals.

The first receiver chain includes a first signal distortion source d1 and a first noise source nl. Contributions of the first signal distortion source d1 and the first noise source n1 can be generated by all components included within the first receiver chain. More precisely, contributions to the first signal distortion source d1 and the first noise source n1 can come from the first adjustable gain element 310, the first frequency converter 312 and the first ADC 314. Corresponding signal distortion sources d2, dN and noise sources n2, nN are shown for the other receiver chains.

To minimize the contribution of the absolute noise floor of each of the receiver chains to the received information signals, it is desirable to maximize the gain of the adjustable gain elements 310, 320, 330. Amplifying the received information signals increases the amplitudes and noise of the received information signals relative to the absolute noise floor of the receiver chains. So generally, it is desirable to maximize the gain of the adjustable gain elements 310, 320, 330.

Signal distortion contributed by each of the receiver chains is generally due to non-linear effects of each of the components within each of the receiver chains. For example, if the amplitudes of the received information signals at the output of the adjustable gain elements 310, 320, 330 are too great, the adjustable gain elements 310, 320, 330 will saturate and add substantial amounts of harmonic distortion to the received information signals. Similar distortion contributions can be generated by the frequency converters 312, 322, 332, and the ADCs 314, 324, 334. Therefore, merely adjusting the adjustable gain elements 310, 320, 330 to the maximum amount of gain can contribute greatly to the total signal error of the received information signals.

As will be described later, the signal error can be monitored while adjusting the adjustable gain elements 310, 320, 330. The best performance typically occurs when the gain of the adjustable gain elements 310, 320, 330 is maximized while maintaining a monitored signal error or less than a predetermined threshold. The predetermined threshold can be determined through simulation and/or testing of wireless transmission channels.

### Orthogonal Frequency Division Multiplexing (OFDM) Modulation

Frequency division multiplexing systems include dividing the available frequency bandwidth into multiple data carriers. OFDM systems include multiple carriers (or tones) that divide transmitted data across the available frequency spectrum. In OFDM systems, each tone is considered to be orthogonal (independent or unrelated) to the adjacent tones. OFDM systems use bursts of data, each burst of a duration of time that is much greater than the delay spread to minimize the effect of ISI caused by delay spread. Data is transmitted in bursts, and each burst consists of a cyclic prefix followed by data symbols, and/or data symbols followed by a cyclic suffix.

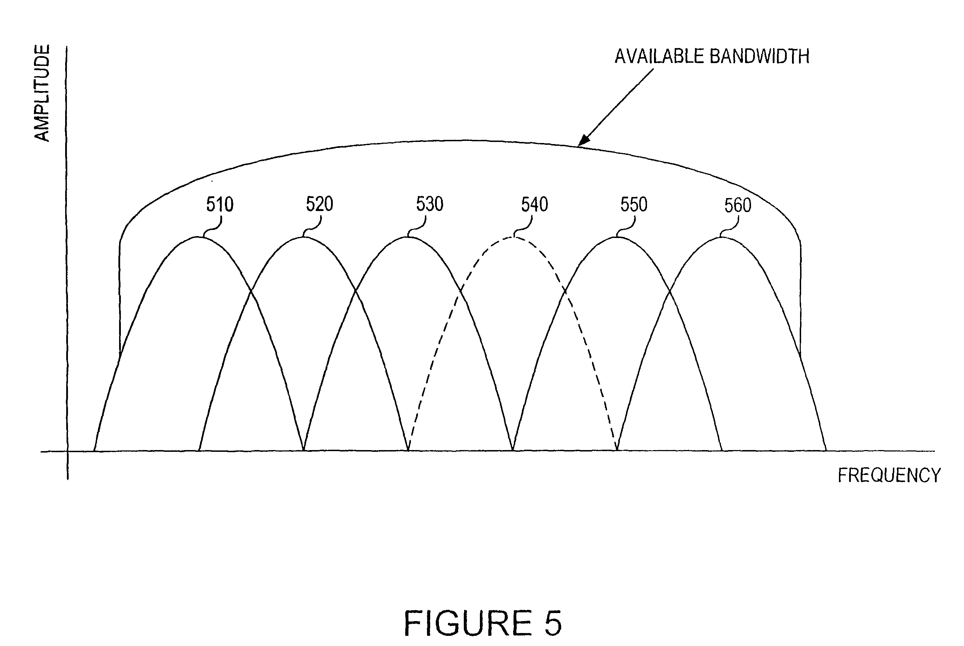

Figure 5 shows a frequency spectrum of OFDM sub-carrier signals 510, 520, 530, 540, 550, 560. Each sub-carrier 510, 520, 530, 540, 550, 560 is modulated by a separate symbol.

An example OFDM signal occupying 6 MHz is made up of 1024 individual carriers (or tones), each carrying a single QAM symbol per burst. A cyclic prefix or cyclic suffix is used to absorb transients from previous bursts caused by multipath signals. Additionally, the cyclic prefix or cyclic suffix causes the symbol stream to look periodic. Additional symbols (for example 100) are transmitted for the cyclic prefix or cyclic suffix. For each OFDM symbol period a total of 1124 samples are transmitted, by only 1024 unique QAM symbols per burst. In general, by the time the cyclic prefix is over, the resulting waveform created by the combining multipath signals is not a function of any samples from the previous burst. Therefore, no ISI occurs. The cyclic prefix must be greater than the delay spread of the multipath signals.

### Calibration of the Signal Error

The frequency spectrum of OFDM sub-carrier signals of Figure 5 can include at least one of the sub-carriers, for example, sub-carrier 540 that is nulled. Calibration of the noise and distortion can be made at the frequency and time slot of the nulled sub-carrier 540. Without a sub-carrier being transmitted at the calibrated time and frequency slot of the zeroed sub-carrier, the received signal consists primarily of the signal error.

Calibration of the signal error by zeroing a sub-carrier of a multiple carrier system is substantially better than a signal error estimation or calibration obtained by zeroing a single carrier of a single carrier system. Zeroing the carrier of a single carrier system eliminates all signal energy during the time slot occupied by the zeroed carrier. As a result, the components within the receiver chains will not distort during the zeroed carrier. Therefore, the estimation of the signal error during the zeroed carrier single carrier is an inaccurate estimation of the signal error when receiving a non-zeroed carrier. However, estimation of the signal error using a zeroed sub-carrier within a multiple carrier signal provides a much more accurate estimate of the signal error because during the transmission of the zeroed tone, the majority of sub-carriers are at full power. Therefore, the components within the receiver chains include distortion due to signal energy passing through the components. If a significant number of carriers are zeroed, then the carriers that are not zeroed can be boosted in power level to compensate for the zeroed carriers.

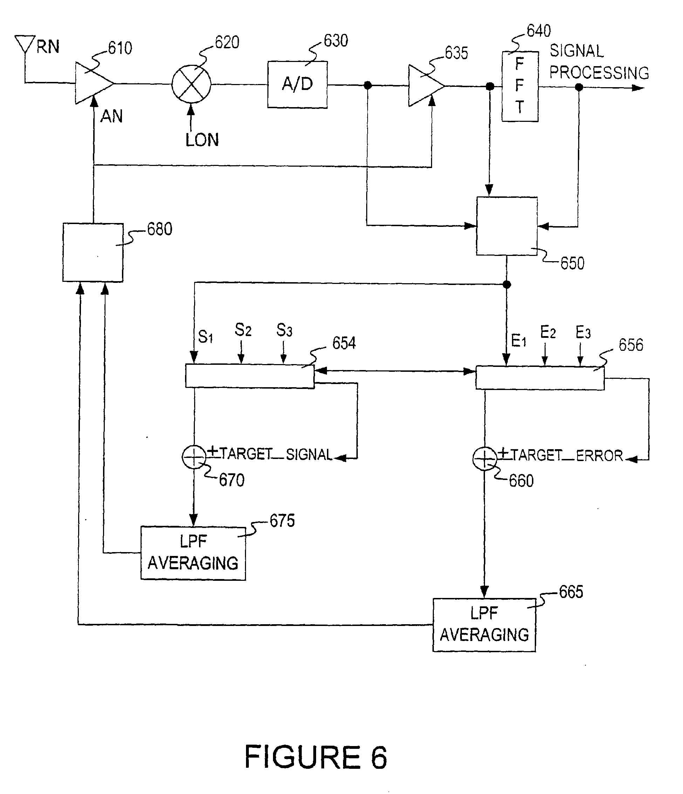

Figure 6 shows another embodiment of the invention that includes the ability to characterize the signal, noise and distortion associated with multiple received signals. Figure 6 only shows a single receive chain. It is to be understood that each receiver chain of a multiple chain (channel) receiver can include the features of the receiver chain shown in Figure 6.

As shown in previous embodiments, a receiver antenna RN receives an information signal. An analog adjustable gain element 610 modifies the amplitude of the received information signal. A frequency converter 620 frequency down converts the received information signal. An ADC 630 samples the frequency down converter information signal. A digital adjustable gain element 635 modifies the amplitude of the sampled received information signal. An FFT (fast fourier transform) block 640 converts the time sampled response at the output of the ADC 630 to the frequency domain. The FFT block 640 is generally included within the previously discussed spatial processing block 350.

A statistics collector 650 is set depending upon whether the receiver has frequency and time lock with the transmitter that is transmitting the information signals. As will be described later, the noise and distortion calibration can be performed during a zeroed signal time slot, or as previously described, during a time slot of and at the frequency of a zero tone of a multiple carrier signal. If the calibration is performed during a zeroed signal time slot, then the statistics collector 650 is connected to the pre-FFT block 640 (either before and/or after the digital adjustable gain element 635). If the calibration is performed at the time of and at the frequency of a zero tone, then the statistics collector 650 is connected to an output of the post-FFT block 640. Connecting the statistics collector 650 to the output of the post-FFT requires the receiver to be locked to the transmitter.

In either setting of the statistics collector 650, a sample is made upon the received input where a transmit signal does not exist. This provides a representation of the noise and distortion of the received signals. A sample is also made where a information signal is know to exist. These two samples (sample without a signal and sample with a signal) can be used to estimate a signal to signal error (noise plus distortion) ratio. As will be described later, this ratio can be used for setting the adjustable gain elements 610, 635, and for setting a modulation mode of the transmitted signals.

A second signal selector 680 determines whether the adjustment AN of the analog adjustable gain element 610 and/or the digital adjustable gain element 635 is accomplished by comparing the sample with a signal to a target_signal, and/or by comparing the sample without a signal with a target_error.

A signal combiner 654 receives signal inputs S2, S3 from other receiver chains. The signal combiner 654 allows other receiver chains to influence the target_signal. A noise combiner 656 receives signal error inputs E1, E2 from other receiver chains. The noise combiner 656 allows other receiver chains to influence the target_error. The signal combiner 654 and the noise combiner 656 are interconnected to additionally allow the signal inputs S2, S3 from other chains to influence the target_error, and the signal error inputs from other chains to influence the target_signal.

If comparing a signal sample with the target_signal, a first comparator 670 provides a difference between the signal sample and the target_signal. A first low pass filter (LPF) 675 filters or averages the output of the first comparator 670 over several signal samples. The second signal selector 680 is set to allow the output of the first LPF 675 to control the drive of the analog adjustable gain element 610 and/or the digital adjustable gain element 635. The drive controls of the adjustable gain elements 610, 635 will converge upon a setting in which the signal sample is approximately equal to the target_signal.

If comparing a sample without a signal with a target_error, a second comparator 660 provides a difference between the sample without a signal and the target_error. A second low pass filter (LPF) 665 filters or averages the output of the second comparator 660 over several signal samples. The second signal selector 680 is set to allow the output of the second LPF 665 to control the drive of the adjustable gain element 610 and/or the digital adjustable gain element 635. The drive controls of the adjustable gain elements 610, 635 will converge upon a setting in which the signal sample is approximately equal to the target error.

An embodiment includes the statistics collector 650 being set depending upon whether the receiver has obtained frequency lock with the transmitter. That is, in order for the receiver to properly estimate the transmitted information, the receiver must be frequency locked and time locked to the transmitter. Frequency and time locking can be obtained through the use pilot sub-carriers as in well known in the art of communication systems. If the receiver has not yet obtained frequency lock, the noise calibration can be performed during a zeroed signal time slot. If the calibration is performed during a zeroed signal time slot, then the statistics collector 650 is connected to the pre-FFT block 640 (either before and/or after the digital adjustable gain element 635). After frequency lock with the transmitter has been obtained, calibration can be performed at the time and frequency of a zero tone. If the calibration is performed at the time of and at the frequency of a zero tone, then the statistics collector 650 is connected to an output of the post-FFT block 640.

The values of the target_signal and target_error can be based upon prior simulation and characterization of transmission channels.

The values of the target_signal and target_error can also be based upon the characteristics of the components within the receiver chain. More specifically, each of the components have a range of signal amplitude in which the operation of the components is more linear (less distortion). The target_signal and target_error can be selected to ensure that the components within the receiver chains are more likely to operate within the linear input power ranges of the components.

It can be advantageous to set the target_error value of multiple receiver chains of a multiple channel receiver to the same value. Additionally, it can be advantageous to set the target_signal value of multiple receiver chains of a multiple channel receiver to the same value. Alternatively, each receiver chain can operate completely independent of the other receiver chains.

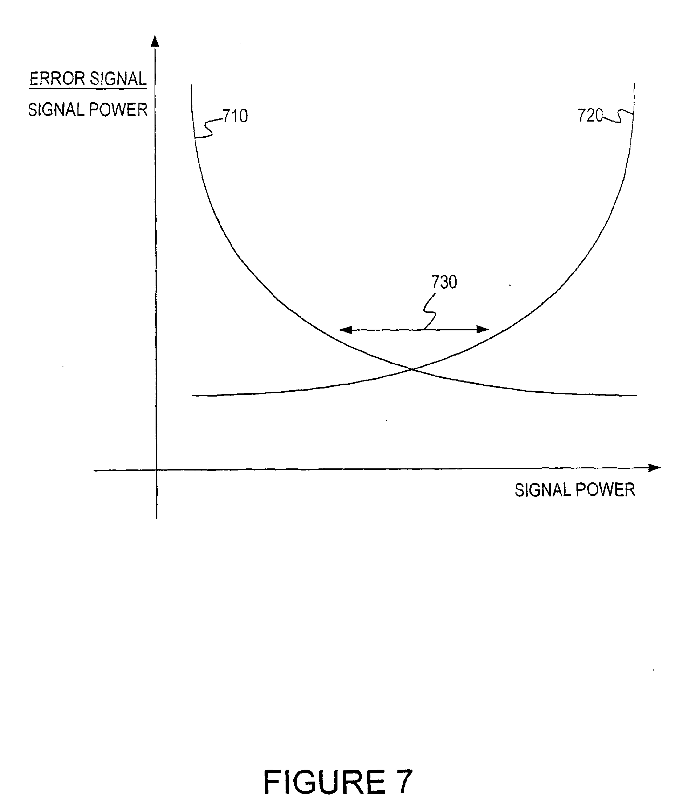

Figure 7 is a plot that shows the relationships between the noise and distortion of the received information signals, and the power of the received information signals. A first curve 710 depicts the relationship between the noise components of the received information signals versus the power level of the received information signals. The noise components have been normalized by the power of the received information signals. The noise components include both average white gausian noise of the received information signals and phase noise of the received information signals. As depicted by the first curve 710, the noise components relative to the power of the received information signal decreases as the power of the received information signals increases.

A second curve 720 depicts the relationship between the distortion components of the received information signals versus the power level of the received information signals. The distortion components have been normalized by the power of the received information signals. As depicted by the first curve 710, the distortion components relative to the power of the received information signal increases as the power of the received information signals increases.

Observation of the first curve 710 and the second curve 710 reveals that there is an intermediate range of signal power in which the noise and distortion components relative to the signal power of the received information signal are minimal. Arrow 730 depicts this optimal range of the signal power.

Each receiver chain of a multiple chain receiver has a unique set of noise and distortion curves. Therefore, the optimal range of signal power for each receiver chain is typically different.

The noise and distortion curves can change with time. Parameters such as temperature, aging, fading, co-channel interference, adjacent channel interference and signal bursting, can all effect the noise and distortion curves. Therefore, the previously described optimal range of signal power can change with time. The values of the previously described target_power and target_error can change with time to adapt to the time varying optimal range of signal power. More specifically, the values of the target_power and target_error can be based on continual characterizations of the average white gaussian noise, the phase noise and the non-linear (distortion) of the received information signal.

Various methods can be used to characterize the average white gaussian noise, the phase noise and the non-linear (distortion) of the received information signal. An embodiment of the invention includes zeroing various sub-carriers of the previously described multiple carrier signals. For example, an average white gaussian noise characterization can be made by zeroing all of the carriers of the multiple carrier signals. An average white gaussian noise, phase noise and non-linear (distortion) characterization can be made be zeroing some of the carriers of the multiple carrier signals. An average white gaussian noise and phase noise characterization can be made by zeroing the odd sub-carriers of the multiple carrier signals. From these three characterizations, the white gaussian noise, phase noise and non-linear (distortion) can each be estimated.

### Other uses of the signal to signal error ratio

The signal error can be used in the decoding process of the received signals. For example, the signal error can vary over frequency. The variations can be characterized with zero tones, and then used for soft decoding of the received information signals.

As previously mentioned, the calibration of the signal error can provide an estimate of the signal power to signal error ratio of the received signals. This ratio can then be used to determine the optimal transmission mode of information transmitted to the receiver. That is, the signal power to signal error ratio can be used to determine a particular modulation type and rate, a particular code type and rate, and may also include other controlled aspects of transmission such as the use of antenna diversity or spatial multiplexing.

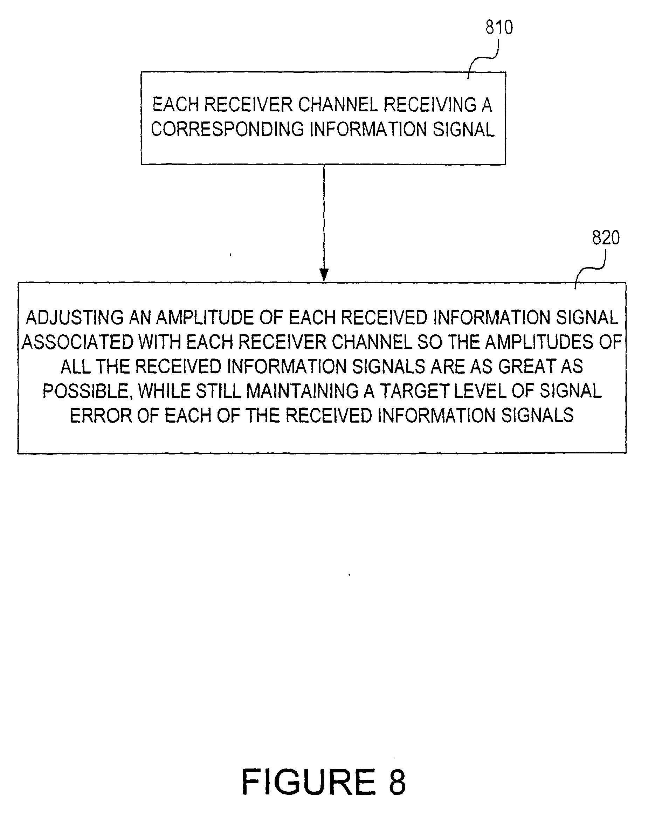

Figure 8 shows a flow chart of steps or acts included within an embodiment of the invention. This embodiment includes a method of receiving a plurality of information signals at a receiver. The information signals each travel through a corresponding transmission channel. The receiver includes a plurality of receiver channels, each receiver channel corresponding to a transmission channel.

A first step 810 of the method includes each receiver channel receiving a corresponding information signal.

A second step 820 includes adjusting an amplitude of each received information signal associated with each receiver channel so the amplitudes of all the received information signals are as great as possible, while still maintaining a target level of signal error of each of the received information signals.

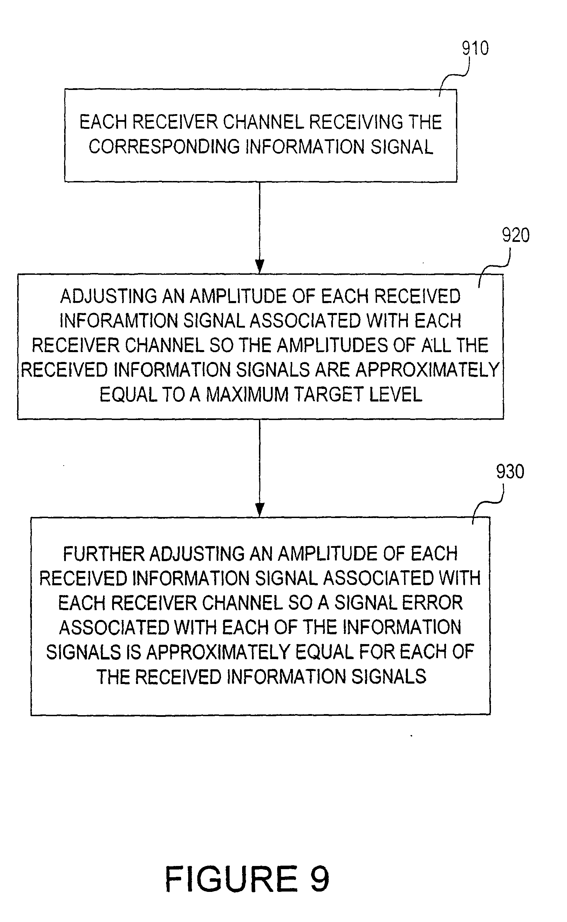

Figure 9 shows a flow chart of steps or acts of another embodiment of the invention.

A first step 910 includes each receiver channel receiving the corresponding information signal.

A second step 920 includes adjusting an amplitude of each received information signal associated with each receiver channel so the amplitudes of all the received information signals are approximately equal to a maximum target level.

A third step 930 includes further adjusting an amplitude of each received information signal associated with each receiver channel so a signal error associated with each of the information signals is approximately equal for each of the received information signals.

Although specific embodiments of the invention have been described and illustrated, the invention is not to be limited to the specific forms or arrangements of parts so described and illustrated. The invention is limited only by the claims.

## Claims

1. A method of receiving a plurality of information signals at a receiver, the information signals each traveling through a corresponding transmission channel, the receiver comprising a plurality of receiver channels, a receiver channel corresponding to each transmission channel, the method comprising:
each receiver channel receiving a corresponding information signal (810);
**characterized by**
adjusting an amplitude of each received information signal associated with each receiver channel (820) so the amplitudes of all the received information signals are equal to a target signal level, while still maintaining a target level of signal error of each of the received information signals, wherein the target signal level is generated based on a combination of the received information signals, and wherein the target level of signal error is generated based on a combination of respective error signals for the received information signals.

2. The method of receiving a plurality of information signals at a receiver of claim 1, wherein the amplitudes of the received information signals are additionally adjusted so that the signal errors of each of the received information signals are equal.

3. The method of receiving a plurality of information signals at a receiver of claim 1, further comprising signal processing the amplitude adjusted received information signals for enabling an estimation of a received information bit stream.

4. The method of receiving a plurality of information signals at a receiver of claim 3, wherein the signal processing comprises spatial processing and demodulation that provides estimation of the received information bit stream for spatially multiplexed received information signals.

5. The method of receiving a plurality of information signals at a receiver of claim 3, wherein the signal processing comprises spatial processing and demodulation that provides estimation of the received information bit stream for transmit diversity received information signals.

6. The method of receiving a plurality of information signals at a receiver of claim 1, further comprising calibrating each receiver channel by measuring a noise reference and a distortion reference for aiding in the estimation of the received information bit stream.

7. The method of receiving a plurality of information signals at a receiver of claim 6, wherein the signal error is estimated by a statistical summation of the noise reference and the distortion reference.

8. The method of receiving a plurality of information signals at a receiver of claim 7, wherein the amplitudes of the received information signals are additionally adjusted so that the signal error of each of the received information signals is equal.

9. The method of receiving a plurality of information signals at a receiver of claim 7, wherein the amplitudes of the received information signals are additionally adjusted so that the signal error of each of the received information signals is equal to the target level of signal error.

10. The method of receiving a plurality of information signals at a receiver of claim 9, wherein the target level of signal error is dynamic depending upon signal error.

11. The method of receiving a plurality of information signals at a receiver of claim 10, wherein the target level of signal error is determined by minimizing a normalized error signal.

12. The method of receiving a plurality of information signals at a receiver of claim 6, wherein the noise reference and the distortion reference are additionally used for adjustment of the amplitudes of the received information signals.

13. The method of receiving a plurality of information signals at a receiver of claim 6, wherein the noise reference and the distortion reference are additionally used for aiding in selection of a transmission mode of the information signals.

14. The method of receiving a plurality of information signals at a receiver of claim 6, wherein the received information signals are multiple carrier signals (510-560), and calibrating each receiver channel is accomplished by receiving multiple carrier signals in which at least one sub-carrier of the received multiple carrier signals is nulled, and the noise reference and the distortion reference of each receiver channel are estimated during the reception of the nulled sub-carrier.

15. The method of receiving a plurality of information signals at a receiver of claim 6, wherein the received information signals are multiple carrier signals (510-560), and calibrating each receiver channel is accomplished before the receiver is phase-locked to a transmitter of the information signals by estimating the noise reference and distortion reference of each receiver channel during reception of a zero time slot.

16. The method of receiving a plurality of information signals at a receiver of claim 6, wherein the received information signals are multiple carrier signals (510-560), and calibrating each receiver channel is accomplished after the receiver is phase-locked to a transmitter of the information signals by estimating the noise reference and distortion. reference of each receiver channel during a zeroed sub-carrier.

17. The method of receiving a plurality of information signals at a receiver of claim I, where in the amplitude adjustments of the received information signals is performed before the received information signals are digitally sampled, and after the received information signals are digitally sampled.

18. A receiver for receiving a plurality of information signals traveling through a corresponding transmission channel, the receiver having receiver channel means corresponding to each transmission channel, each receiver channel means having:
means for receiving a corresponding information signal; **characterized by**
means for adjusting an amplitude of each received information signal associated with each receiver channel means so the amplitudes of all the received information signals are equal to a maximum target level, while still maintaining a target level of signal error of each of the received information signals, wherein the target signal level is generated based on a combination of the received information signals, and wherein the target level of signal error is generated based on a combination of respective error signals for the received information signals.

## Patentansprüche

1. Verfahren zum Empfangen mehrere Informationssignale an einem Empfänger, wobei die Informationssignale jeweils durch einen entsprechenden Übertragungskanal laufen, wobei der Empfänger mehrere Empfängerkanäle umfasst, wobei jedem Übertragungskanal ein Empfängerkanal entspricht, das Verfahren Folgendes umfassend:
Empfangen eines entsprechenden Informationssignals (810) durch jeden Empfängerkanal; **gekennzeichnet durch**
Einstellen einer Amplitude jedes empfangenen Informationssignals, welches jedem Empfängerkanal (820) zugeordnet ist, so dass die Amplituden aller empfangenen Informationssignale gleich einem Zielsignalpegel sind, während noch ein Signalfehler-Zielpegel für jedes der empfangenen Informationssignale unterhalten wird, wobei der Zielsignalpegel auf der Grundlage einer Kombination der empfangenen Informationssignale erzeugt wird und wobei der Signalfehler-Zielpegel auf der Grundlage einer Kombination aus jeweiligen Fehlersignalen für die empfangenen Informationssignale erzeugt wird.

2. Verfahren zum Empfangen mehrerer Informationssignale an einem Empfänger nach Anspruch 1, wobei die Amplituden der empfangenen Informationssignale zusätzlich so eingestellt werden, dass die Signalfehler jedes der empfangenen Informationssignale gleich sind.

3. Verfahren zum Empfangen mehrerer Informationssignale an einem Empfänger nach Anspruch 1, weiterhin umfassend Signalverarbeiten der Amplitudeneingestellten, empfangenen Informationssignale zum Ermöglichen einer Abschätzung eines empfangenen Informationsbitstroms.

4. Verfahren zum Empfangen mehrerer Informationssignale an einem Empfänger nach Anspruch 3, wobei das Signalverarbeiten räumliches Verarbeiten und Demodulation umfasst, welche eine Abschätzung des empfangenen Informationsbitstroms für räumlich multiplexierte, empfangene Informationssignale bereitstellt.

5. Verfahren zum Empfangen mehrerer Informationssignale an einem Empfänger nach Anspruch 3, wobei das Signalverarbeiten räumliches Verarbeiten und Demodulation umfasst, welche eine Abschätzung des empfangenen Informatiorisbitstrems für Übertragungsdiversity-empfangene Informationssignale bereitstellt.

6. Verfahren zum Empfangen mehrerer Informationssignale an einem Empfänger nach Anspruch 1, weiterhin umfassend Kalibrieren jedes Empfängerkanals durch Messen einer Rauschreferenz und einer Verzerrungsreferenz zum Unterstützen der Abschätzung des empfangenen Informationsbitstroms.

7. verfahren zum Empfangen mehrerer Informationssignale an einem Empfänger nach Anspruch 6, wobei der Signalfehler durch eine statistische Summierung der Rauschreferenz und der Verzerrungsreferenz geschätzt wird.

8. Verfahren zum Empfangen mehrerer Informationssignale an einem Empfänger nach Anspruch 7, wobei die Amplituden der empfangenen Informationssignale zusätzlich so eingestellt werden, dass der Signalfehler jedes der empfangenen Informationssignale gleich ist.

9. Verfahren zum Empfangen mehrerer Informationssignale an einem Empfänger nach Anspruch 7, wobei die Amplituden der empfangenen Informationssignale zusätzlich so eingestellt werden, dass der Signalfehler jedes der empfangenen Informationssignale gleich dem Signalfehler-Zielpegel ist.

10. Verfahren zum Empfangen mehrerer Informationssignale an einem Empfänger nach Anspruch 9, wobei der Signalfehler-Zielpegel dynamisch vom Signalfehler abhängt.

11. Verfahren zum Empfangen mehrerer Informationssignale an einem Empfänger nach Anspruch 10, wobei der Signalfehler-Zielpegel durch Minimieren eines normalisierten Fehlersignals bestimmt wird.

12. Verfahren zum Empfangen mehrerer Informationssignale an einem Empfänger nach Anspruch 6, wobei die Rauschreferenz und die Verzerrungsreferenz zusätzlich zur Einstellung der Amplituden der empfangenen Informationssignale verwendet werden.

13. Verfahren zum Empfangen mehrerer Informationssignale an einem Empfänger nach Anspruch 6, wobei die Rauschreferenz und die Verzerrungsreferenz zusätzlich zum Unterstützen der Auswahl eines Übertragungsmodus der Informationssignale verwendet werden.

14. Verfahren zum Empfangen mehrerer Informationssignale an einem Empfänger nach Anspruch 6, wobei die empfangenen Informationssignale mehrere Trägersignale (510 bis 560) sind und Kalibrieren jedes Empfängerkanals erzielt wird durch Empfangen mehrerer Trägersignale, bei welchen mindestens ein Subträger der empfangenen mehreren Trägersignale genullt wird und die Rauschreferenz und die Verzerrungsreferenz jedes Empfängerkanals während des Empfangs des genullten Subträgers geschätzt werden.

15. Verfahren zum Empfangen mehrerer Informationssignale an einem Empfänger nach Anspruch 6, wobei die empfangenen Informationssignale mehrere Trägersignale (510 bis 560) sind und Kalibrieren jedes Empfängerkanals erzielt wird, bevor der Empfänger mit einem Sender der Informationssignale durch Abschätzen der Rauschreferenz und Verzerrungsreferenz jedes Empfängerkanals während des Empfangs eines Null-Zeitschlitzes phasensynchronisiert wird.

16. Verfahren zum Empfangen mehrerer Informationssignale an einem Empfänger nach Anspruch 6, wobei die empfangenen Informationssignale mehrere Trägersignale (510 bis 560) sind und Kalibrieren jedes Empfängerkanals erzielt wird, nachdem der Empfänger mit einem Sender der Informationssignale durch Abschätzen der Rauschreferenz und Verzerrungsreferenz jedes Empfängerkanals während eines genullten Subträgers phasensynchronisiert wird.

17. Verfahren zum Empfangen mehrerer Informationssignale an einem Empfänger nach Anspruch 1, wobei die Amplitudeneinstellungen der empfangenen Informationssignale durchgeführt werden, bevor die empfangenen Informationssignale digital abgetastet werden und nachdem die empfangenen Informationssignale digital abgetastet werden.

18. Empfänger zum Empfangen mehrerer Informationssignale, welche durch einen entsprechenden übertragungskanal laufen, wobei der Empfänger Empfängerkanalmittel aufweist, welche jedem Übertragungskanal entsprechen, wobei jedes Empfängerkanalmittel Folgendes aufweist:
Mittel zum Empfangen eines entsprechenden Informationssignals; gekenntzeichnet durch
Mittel zum Einstellen einer Amplitude jedes empfangenen Informationssignals, welches jedem Empfängerkanalmittel zugeordnet ist, so dass die Amplituden aller empfangenen Informationssignale gleich einem maximalen Zielpegel sind, während noch ein Signalfehler-Zielpegel für jedes der empfangenen Iriformationssignale unterhalten wird, wobei der Zielsignalpegel auf der Grundlage einer Kombination der empfangenen Informationssignale erzeugt wird und wobei der Signalfehler-Zielpegel auf der Grundlage einer Kombination aus jeweiligen Fehlersignalen für die empfangenen Informationssignale erzeugt wird.

## Revendications

1. Procédé de réception d'une pluralité de signaux d'informations sur un récepteur, les signaux d'informations se propageant chacun à travers un canal de transmission correspondant, le récepteur comprenant une pluralité de canaux de récepteur, un canal de récepteur correspondant à chaque canal de transmission, le procédé comprenant :
chaque canal de récepteur recevant un signal d'informations correspondant (810) ;
**caractérisé par**
l'ajustement d'une amplitude de chaque signal d'informations reçu associée à chaque canal de récepteur (820) de façon à ce que les amplitudes de tous les signaux d'informations reçus soient égales à un niveau de signal cible, tout en maintenant un niveau cible de l'erreur de signal de chacun des signaux d'informations reçus, où le niveau de signal cible est généré sur la base d'une combinaison des signaux d'informations reçus, et où le niveau cible d'erreur de signal est généré sur la base d'une combinaison de signaux d'erreur respectifs pour les signaux d'informations reçus.

2. Procédé de réception d'une pluralité de signaux d'informations sur un récepteur selon la revendication 1, dans lequel les amplitudes des signaux d'informations reçus sont ajustées additionnellement pour que les erreurs de signal de chacun des signaux d'informations reçus soient égales.

3. Procédé de réception d'une pluralité de signaux d'informations sur un récepteur selon la revendication 1, comprenant en outre le traitement de signal des signaux d'informations reçus ajustes en amplitude pour permettre une estimation d'un flux binaire d'informations reçu.

4. Procédé de réception d'une pluralité de signaux d'informations sur un récepteur selon la revendication 3, dans lequel le traitement de signal comprend le traitement spatial et la démodulation qui permet l'estimation du flux binaire d'informations reçu pour des signaux d'informations reçus multiplexés spatialement.

5. Procède de réception d'une pluralité de signaux d'informations sur un récepteur selon la revendication 3, dans lequel le traitement de signal comprend un traitement spatial et une démodulation qui fournit une estimation du flux binaire d'informations reçu pour transmettre des signaux d'informations reçus en diversité.

6. Procédé de réception d'une pluralité de signaux d'informations sur un récepteur selon la revendication 1, comprenant en outre le calibrage de chaque canal de récepteur en mesurant une référence de bruit et une référence de distorsion pour aider dans l'estimation du flux binaire d'informations reçu.

7. Procédé de réception d'une pluralité de signaux d'informations sur un récepteur selon la revendication 6, dans lequel l'erreur de signal est estimée par une sommation statistique de la référence de bruit et de la référence de distorsion.

8. Procédé de réception d'une pluralité de signaux d'informations sur un récepteur selon la revendication 7, dans lequel les amplitudes des signaux d'informations reçus sont additionnellement ajustées pour que l'erreur de signal de chacun des signaux d'informations reçus soit égale.

9. Procédé de réception d'une pluralité de signaux d'informations sur un récepteur selon la revendication 7, dans lequel les amplitudes des signaux d'informations reçus sont additionnellement ajustées pour que l'erreur de signal de chacun des signaux d'informations reçus soit égale au niveau cible d'erreur de signal.

10. Procédé de réception d'une pluralité de signaux d'informations sur un récepteur selon la revendication 9, dans lequel le niveau cible d'erreur de signal est dynamique dépendant de l'erreur de signal.

11. Procédé de réception d'une pluralité de signaux d'informations sur un récepteur selon la revendication 10, dans lequel le niveau cible d'erreur de signal est déterminé en minimisant un signal d'erreur normalisé.

12. Procédé de réception d'une pluralité de signaux d'informations sur un récepteur selon la revendication 6, dans lequel la référence de bruit et la référence de distorsion sont additionnellement utilisées pour l'ajustement des amplitudes des signaux d'informations reçus.

13. Procédé de réception d'une pluralité de signaux d'informations sur un récepteur selon la revendication 6, dans lequel la référence de bruit et la référence de distorsion sont additionnellement utilisées pour aider dans la sélection d'un mode de transmission des signaux d'informations.

14. Procédé de réception d'une pluralité de signaux d'informations sur un récepteur selon la revendication 6, dans lequel les signaux d'informations reçus sont des signaux de multiples porteuses (510-560), et le calibrage de chaque canal de récepteur est accompli en recevant des signaux de multiples porteuses dans lequel au moins une sous-porteuse des signaux de multiples porteuses reçus est annulée, et la référence de bruit et la référence de distorsion de chaque canal de récepteur sont estimées pendant la réception de la sous-porteuse annulée.

15. Procédé de réception d'une pluralité de signaux d'informations sur un récepteur selon la revendication 6, dans lequel les signaux d'informations reçus sont des signaux de multiples porteuses (510-560), et le calibrage de chaque canal de récepteur est accompli avant que le récepteur soit verrouillé en phase à un émetteur des signaux d'informations en estimant la référence de bruit et la référence de distorsion de chaque canal de récepteur pendant la réception d'une tranche de temps mise à zéro.

16. Procédé de réception d'une pluralité de signaux d'informations sur un récepteur selon la revendication 6, dans lequel les signaux d'informations reçus sont des signaux de multiples porteuses (510-560), et le calibrage de chaque canal de récepteur est accompli après que le récepteur soit verrouillé en phase à un émetteur des signaux d'informations en estimant la référence de bruit et la référence de distorsion de chaque canal de récepteur pendant une sous-porteuse annulée.

17. Procédé de réception d'une pluralité de signaux d'informations sur un récepteur selon la revendication 1, dans lequel les ajustements d'amplitude des signaux d'informations reçus sont réalisés avant que les signaux d'informations reçus soient numériquement échantillonnés, et après que les signaux d'informations reçus soient numériquement échantillonnés,

18. Récepteur pour recevoir une pluralité de signaux d'informations se propageant à travers un canal de transmission correspondant, le récepteur ayant un moyen de canal de récepteur correspondant à chaque canal de transmission, chaque moyen de canal de récepteur ayant :
un moyen pour recevoir un signal d'informations correspondant ; **caractérisé par**
un moyen pour ajuster une amplitude de chaque signal d'informations reçu associé à chaque moyen de canal de récepteur de façon à ce que les amplitudes de tous les signaux d'informations reçus soient égales à un niveau cible maximum, tout en maintenant un niveau cible d'erreur de signal de chacun des signaux d'informations reçus, où le niveau de signal cible est généré sur la base d'une combinaison des signaux d'informations reçus, et où le niveau cible d'erreur de signal est généré sur la base d'une combinaison de signaux d'erreur respectifs pour les signaux d'informations reçus.
